# EUROPÄISCHE PATENTANMELDUNG

(11) **EP 3 109 497 A1**
(43) Veröffentlichungstag der Anmeldung: **28.12.2016**
(21) Anmeldenummer: 16175850.3
(22) Anmeldetag: 23.06.2016
(51) Int. Cl.: F16D 13/70, F16D 13/75

(54) **DREHSCHWINGUNGSDÄMPFER MIT NACHSTELLEINRICHTUNG**

(30) Priorität: 26.06.2015 DE 102015211882
(71) Anmelder: Schaeffler Technologies AG & Co. KG, 91074 Herzogenaurach (DE)
(72) Erfinder: Voorspoels, Ludovic, 67410 Drusenheim (FR); Castel, Fabien, 67100 Strasbourg (FR); Cotier, Olivier, 67100 Strasbourg (FR)

(57) **Zusammenfassung**

Drehschwingungsdämpfer für einen Verbrennungsmotor, aufweisend eine Schwungscheibe (2) und eine Gegendruckplatte (3), wobei die Gegendruckplatte (3) über zumindest eine erste Blattfeder (4) an der Schwungscheibe (2) drehfest befestigt ist und mittels einer Nachstelleinrichtung (5) zum Nachstellen eines verschleißbedingten Fehlabstands der Gegendruckplatte (3) zu einer Anpressplatte (6) einer Reibungskupplung (7) begrenzt axial verlagerbar ist und wobei die zumindest eine erste Blattfeder (4) aus der Schwungscheibe (2) ausgeformt ist.

## Beschreibung

Die vorliegende Erfindung betrifft einen Drehschwingungsdämpfer mit einer Nachstelleinrichtung, insbesondere ein Einmassenschwungrad oder Zweimassenschwungrad, mit deren Hilfe ein Nachstellen eines verschleißbedingten Fehlabstands einer Anpressplatte zu einer Gegendruckplatte einer Reibungskupplung eines Kraftfahrzeugs erfolgen kann.

Drehschwingungsdämpfer sind zur Dämpfung von Drehschwingungen einer Antriebswelle eines Kraftfahrzeugmotors bekannt. Beispielsweise ist aus der DE 10 2008 004 150 A1 ein Zweimassenschwungrad bekannt, bei dem zur Drehschwingungsdämpfung einer Kurbelwelle eines Verbrennungsmotors eine Primärmasse über eine Bogenfeder mit einer relativ zur Primärmasse verdrehbaren Sekundärmasse gekoppelt ist. Die Bogenfeder ist in einem Bogenfederkanal angeordnet, wobei eine Kanalwand des Bogenfederkanals durch die Primärmasse ausgebildet ist. In den Bogenfederkanal ragt ein Flansch der Sekundärmasse hinein, der über einen Reibring an der Kanalwand abgestützt ist.

Ferner ist es bekannt, dass Reibungskupplungen zum Ausgleich eines auftretenden Verschleißes von Reibbelägen mit einer kraftgesteuerten Nachstelleinrichtung versehen sind. Hier wird eine infolge eines Verschleißes ungünstige Entwicklung der Anpresskraft eines eine Gegendruckplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschließ der Reibbeläge der Kupplungsscheibe auftretender Fehlabstand zwischen dem Kupplungsgehäuse und dem Betätigungssystem ermittelt ("sensiert") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus der DE 10 2009 035 225 A1, WO 2009/056092 A1 und DE 10 2011 086 995 A1 ist jeweils eine Reibungskupplung mit einer weggesteuerten Nachstelleinrichtung bekannt, bei der eine sich in Abhängigkeit vom Abstand eines Betätigungssystems mit einer Tellerfeder und einer Anpressplatte axial verlagernde Antriebsklinke eines Sensierblechs auf ein Ritzel einer Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegendruckplatte gegenüber der Anpressplatte die Antriebsklinke auf den Zähnen des Ritzels und rastet bei einem vorgegebenen Verschließ in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Der Rampenring weist eine Eingriffsöffnung auf, in die ein von der Spindelmutter abstehender Zahn eingreift, sodass bei einem Verdrehen der Spindel in einer axialen Bewegung der Spindelmutter entlang der Spindel der Zahn der Spindelmutter den Rampenring verdrehen kann. Nachstelleinrichtungen mit einem derartigen Betätigungsprinzip werden auch als "TAC-Spindel" bezeichnet. Nachteilig an den bekannten Drehschwingungsdämpfern ist deren hohe Komponentenanzahl, die zu einem hohen Montageaufwand führt.

Aufgabe der Erfindung ist es daher, einen Drehschwingungsdämpfer mit einer Nachstelleinrichtung anzugeben, der sich durch eine geringe Komponentenanzahl auszeichnet.

Diese Aufgabe wird gelöst mit einem Drehschwingungsdämpfer gemäß den Merkmalen des unabhängigen Anspruchs. Weitere vorteilhafte Ausgestaltungen des Drehschwingungsdämpfers sind in den abhängig formulierten Ansprüchen angegeben. Es ist darauf hinzuweisen, dass die in den abhängig formulierten Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Der erfindungsgemäße Drehschwingungsdämpfer für einen Verbrennungsmotor weist eine Schwungscheibe und eine Gegendruckplatte auf, wobei die Gegendruckplatte über zumindest eine erste Blattfeder an der Schwungscheibe drehfest befestigt ist und mittels einer Nachstelleinrichtung zum Nachstellen eines verschleißbedingten Fehlabstands der Gegendruckplatte zu einer Anpressplatte einer Reibungskupplung begrenzt axial verlagerbar ist und wobei die zumindest eine erste Blattfeder aus der Schwungscheibe ausgeformt ist.

Bei dem Drehschwingungsdämpfer handelt es sich insbesondere um ein Einmassenschwungrad oder ein Zweimassenschwungrad, der der Reduzierung von Drehschwingungen einer Kurbelwelle eines Verbrennungsmotors eines Kraftfahrzeugs dient. Der Drehschwingungsdämpfer weist als Schwungmasse eine Schwungscheibe auf, die im Falle eines Zweimassenschwungrads eine über zumindest eine Feder gekoppelte Primärschwungscheibe und Sekundärschwungscheibe umfasst. Die Schwungscheibe bzw. die Primärschwungscheibe und/oder die Sekundärschwungscheibe bestehen insbesondere zumindest teilweise aus Metall und/oder Blech und/oder weisen jeweils eine Dicke von 3 mm (Millimeter) bis 15 mm, bevorzugt 4 mm bis 8 mm oder besonders bevorzugt 5 mm auf. Der Drehschwingungsdämpfer weist ferner eine Gegendruckplatte mit einer Reibfläche für eine Kupplungsscheibe einer Reibungskupplung auf. Bei einer solchen Reibungskupplung kann es sich insbesondere um eine Einscheibentrockenkupplung oder Doppelkupplung handeln, die der Unterbrechung eines Drehmomentflusses von dem Verbrennungsmotor auf einen Antriebsstrang des Kraftfahrzeugs dient. Solche Reibungskupplungen weisen regelmäßig einen Kupplungsdeckel und eine Anpressplatte auf, die bevorzugt aus Metall und/oder Blech bestehen. Die Anpressplatte ist zum reibschlüssigen Anpressen der Kupplungsscheibe an die mit einer Abtriebsseite des Verbrennungsmotors verbindbare Gegendruckplatte durch eine Tellerfeder verstellbar. Die Anpressplatte ist in dem Kupplungsdeckel insbesondere drehfest gelagert und in einer axialen Richtung durch die Tellerfeder begrenzt verlagerbar. Die Tellerfeder ist in dem Kupplungsdeckel abgestützt und insbesondere durch eine Aktoreinrichtung betätigbar. Die Gegendruckplatte des Drehschwingungsdämpfers ist über zumindest eine erste Blattfeder an der Schwungscheibe drehfest befestigt und mittels einer Nachstelleinrichtung zum Nachstellen eines verschleißbedingten Fehlabstands der Gegendruckplatte zu der Anpressplatte der Reibungskupplung begrenzt axial verlagerbar. Die Nachstelleinrichtung zum Nachstellen des verschleißbedingten Fehlabstands der Anpressplatte zu der Gegendruckplatte ist beispielsweise aus der unveröffentlichten Patentanmeldung DE 10 2014 216 594.6 bekannt, die hiermit vollumfänglich in Bezug genommen wird. Die zumindest eine erste Blattfeder ist zudem aus der Schwungscheibe ausgeformt. Dies bedeutet mit anderen Worten, dass es sich bei der zumindest einen Blattfeder nicht um ein separates Bauteil handelt, sondern die Schwungscheibe und die zumindest eine erste Blattfeder ein gemeinsames bzw. ein einziges Bauteil darstellen. Hierzu kann die zumindest eine erste Blattfeder beispielsweise durch einen Stanz- und Biegevorgang aus der Schwungscheibe ausgebildet sein. Hierdurch wird die Bauteilanzahl des Drehschwingungsdämpfers in vorteilhafter weise reduziert.

Ebenfalls vorteilhaft ist es, wenn die Schwungscheibe eine Primärschwungscheibe und eine Sekundärschwungscheibe aufweist und wobei die zumindest eine erste Blattfeder aus der Sekundärschwungscheibe ausgeformt ist. Die Schwungscheibe ist in diesem Fall als Zweimassenschwungrad ausgebildet.

Ebenfalls vorteilhaft ist es, wenn eine Mehrzahl der ersten Blattfedern axial aufeinander als zumindest ein erstes Blattfederpaket angeordnet ist. Dies bedeutet mit anderen Worten, dass beispielweise zwei oder drei Blattfedern, insbesondere mit einer Stärke von je 0,2 mm bis 5 mm, bevorzugt 0,5 mm, aufeinanderliegend angeordnet sind. Die ersten Blattfedern können hierzu zum Beispiel per Laser nach der Blechbiegung erstellt werden. Hierdurch können bei der Montage zum einen die Platzierung der ersten Blattfedern und zum anderen deren Vernietung mit dem Schwungrad in vorteilhafter weise entfallen.

Ebenfalls vorteilhaft ist es, wenn die Schwungscheibe ein Primärblech und ein Sekundärblech aufweist und wobei die zumindest eine erste Blattfeder aus dem Primärblech ausgeformt ist. Insbesondere umfasst die Sekundärschwungscheibe der Schwungscheibe das Primärblech und Sekundärblech. Bei dem Primärblech handelt es sich insbesondere um ein motorseitiges Trägerblech und bei dem Sekundärblech um ein kupplungsdeckelseitiges Stützblech. Das Sekundärblech kann zudem mit dem Primärblech verschweißt sein und als Anschraubfläche für den Kupplungsdeckel dienen.

Weiterhin ist es vorteilhaft, wenn die die Nachstelleinrichtung eine Antriebseinheit mit zumindest einer zweiten Blattfeder aufweist und wobei die zumindest eine zweite Blattfeder aus der Schwungscheibe ausgeformt ist. Bei der Antriebseinheit handelt es sich insbesondere um eine Antriebsfeder mit einer Antriebsklinke, die in ein Ritzel der Nachstelleinrichtung eingreifen kann und die an der zumindest einen zweiten Blattfeder befestigt ist.

Zudem ist es vorteilhaft, wenn die Schwungscheibe ein Primärblech und ein Sekundärblech aufweist und wobei die zumindest eine zweite Blattfeder aus dem Sekundärblech ausgeformt ist.

Darüber hinaus ist es vorteilhaft, wenn eine Mehrzahl der zweiten Blattfedern axial aufeinander als zumindest ein zweites Blattfederpaket angeordnet ist. Auch hierbei können die zweiten Blattfedern eine Stärke von je 0,2 mm bis 5 mm, bevorzugt 0,5 mm aufweisen. Auch die zweiten Blattfedern können hierzu zum Beispiel per Laser nach der Blech-Biegung erzeugt werden.

Des Weiteren ist es vorteilhaft, wenn zwischen der Schwungscheibe und der Gegendruckplatte eine Zwischenplatte mit zumindest einer Rampe angeordnet ist und wobei an der Schwungscheibe zumindest eine Gegenrampe als Gegenlager für die zumindest eine Rampe ausgebildet ist. Der Zwischenring ist mittels der Nachstelleinrichtung relativ zu dem Schwungrad verdrehbar und dadurch axial verstellbar. Weiterhin weist die Zwischenplatte zumindest eine Rampe auf, die insbesondere an einem äußeren Rand der Zwischenplatte angeordnet ist und/oder die sich in eine axiale Richtung erstreckt. Ferne weist die Zwischenplatte bevorzugt eine Masse auf, die 40 % bis 160 % der Masse der Gegendruckplatte entspricht. Hierdurch kann die Zwischenplatte eine signifikante Wärmekapazität bereitstellen. Die Schwungscheibe weist eine zu der Anzahl der Rampen entsprechende Anzahl von Gegenrampen auf, die als Gegenlager für die Rampen dienen.

Zudem ist es vorteilhaft, wenn die Zwischenplatte eine Mehrzahl von Langlöchern aufweist, mittels denen die Zwischenplatte an die Gegendruckplatte anbindbar ist. Hierzu kann die Gegendruckplatte Stifte oder Niete aufweisen, die in die Langlöcher eingreifen, sodass die Gegendruckplatte und die Zwischenplatte stets zueinander zentriert sind. Die Mehrzahl von Langlöchern dient bei einer Rotation der Zwischenplatte durch die Nachstelleinrichtung insbesondere als Kulisse für die Stifte oder Niete.

Weiterhin ist es vorteilhaft, wenn die Gegendruckplatte an der zumindest einen ersten Blattfeder befestigt ist. Die Befestigung kann beispielsweise durch eine Nietverbindung, Schraubverbindung oder Schweißverbindung erfolgen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: einen Drehschwingungsdämpfer mit einer Primärschwungscheibe und einer Sekundärschwungscheibe;
- Fig. 2:: ein Primärblech der Sekundärschwungscheibe;
- Fig. 3:: eine Detailansicht des Primärblechs;
- Fig. 4:: das Primärblech mit einer Zwischenplatte;
- Fig. 5:: die Zwischenplatte;
- Fig. 6:: das Primärblech mit der Zwischenplatte und einer Gegendruckplatte;
- Fig. 7:: die Sekundärschwungscheibe mit dem Primärblech und einem Sekundärblech;
- Fig. 8:: eine Schnittansicht einer Reibungskupplung mit dem Drehschwingungsdämpfer; und
- Fig. 9:: eine vergrößerte Ansicht des in der Fig. 8 mit IX markierten Bereichs.

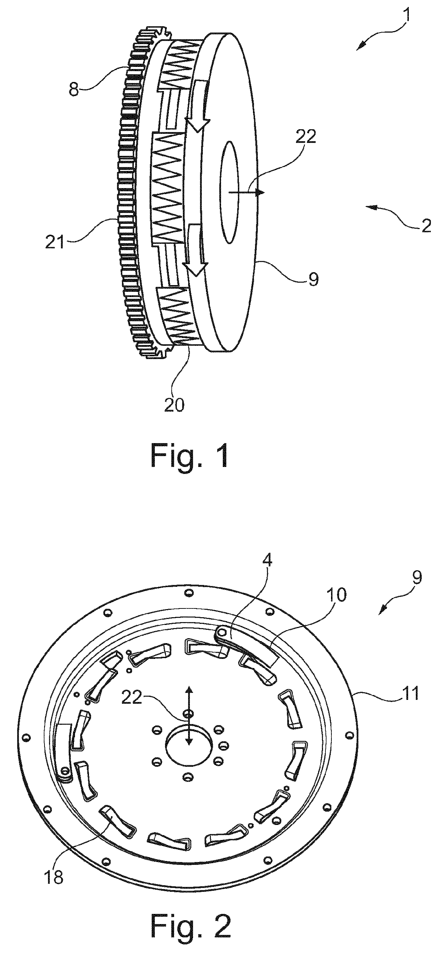

Die Fig. 1 zeigt einen Drehschwingungsdämpfer 1 mit einer Schwungscheibe 2, die eine Primärschwungscheibe 8 und eine Sekundärschwungscheibe 9 umfasst. Die Schwungscheibe 2 ist hier somit als Zweimassenschwungrad ausgebildet. Die Primärschwungscheibe 8 und die Sekundärschwungscheibe 9 sind über Federn 20 miteinander gekoppelt und in einer axialen Richtung 22 benachbart angeordnet. Die axiale Richtung 22 verläuft dabei parallel zu einer Rotationsachse des Drehschwingungsdämpfers 1. Die Primärschwungscheibe 8 weist zudem an ihrem Umfang einen Anlasserzahnkranz 21 auf.

Die Fig. 2 zeigt ein Primärblech 11 der Sekundärschwungscheibe 9. Das Primärblech 11 weist in einer Umfangsrichtung um jeweils 120° versetzt angeordnete erste Blattfederpakete 10 auf, die jeweils eine Mehrzahl von in der axialen Richtung 22 aufeinanderliegende erste Blattfedern 4 aufweisen. Die einzelnen ersten Blattfedern 4 der jeweiligen ersten Blattfederpakete 10 wurden nach dem Biegen der ersten Blattfedern 4 per Laser erzeugt. Weiterhin weist das Primärblech 11 eine Vielzahl von Gegenrampen 18 auf, die in der Umfangsrichtung verteilt angeordnet sind.

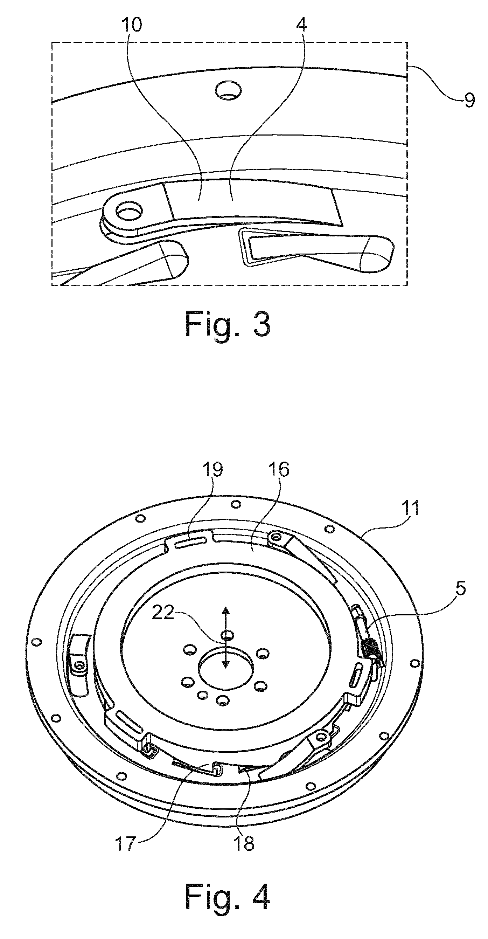

Die Fig. 3 zeigt einen vergrößerten Ausschnitt des in der Fig. 2 gezeigten Primärblechs 11 im Bereich eines ersten Blattfederpakets 10 mit der Mehrzahl von ersten Blattfedern 4.

Die Fig. 4 zeigt das Primärblech 11 mit einer Zwischenplatte 16, die eine Vielzahl in der Umfangsrichtung verteilt angeordnete Rampen 17 aufweist. Die Rampen 17 der Zwischenplatte 16 liegen an den Gegenrampen 18 des Primärblechs 11 an. Die Zwischenplatte 16 ist mittels einer Nachstelleinrichtung 5 gegenüber dem Primärblech 11 verdrehbar und dadurch gegenüber dem Primärblech 11 in der axialen Richtung 22 verstellbar. Weiterhin weist die Zwischenplatte 16 drei um jeweils 120° in einer Umfangsrichtung versetzt zueinander angeordnete Langlöcher 19 auf.

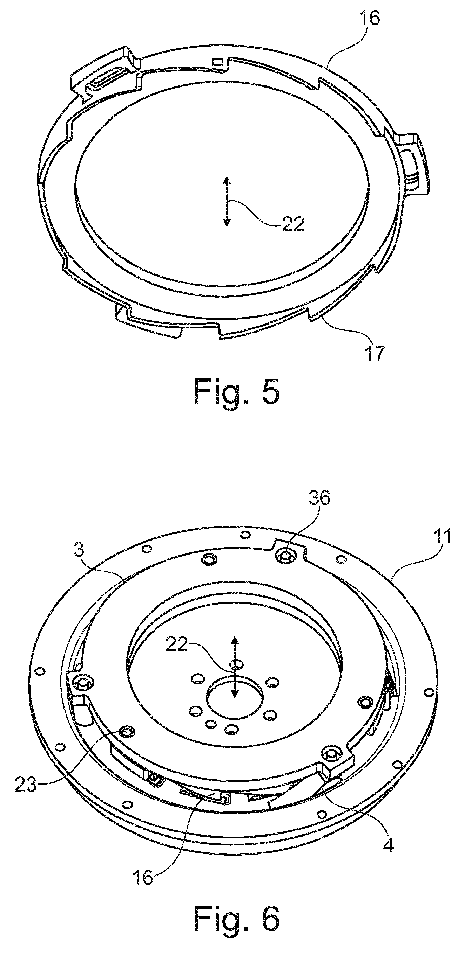

Die Fig. 5 zeigt die Zwischenplatte 16 in einer perspektivischen Darstellung. Zu erkennen sind hier insbesondere die Mehrzahl vom Rampen 17, die an einem äußeren Rand der Zwischenplatte 16 angeordnet sind und sich in die axiale Richtung 22 erstrecken.

Die Fig. 6 zeigt das Primärblech 11 mit der Zwischenplatte 16 und einer auf der Zwischenplatte 16 angeordneten Gegendruckplatte 3. Die Gegendruckplatte 3 ist mittels den Nieten 36 an den ersten Blattfedern 4 des Primärblechs 11 befestigt und mittels der Zwischenplatte 16 in der axialen Richtung 22 relativ zu dem Primärblech 11 verstellbar. Die Gegendruckplatte 3 weist zudem Stifte 23 auf, die in die in der Fig. 4 gezeigten Langlöcher 19 der Zwischenplatte 16 eingreifen. Die Zwischenplatte 16 ist hierdurch gegenüber der Gegendruckplatte 3 und der Zwischenplatte 16 begrenzt verdrehbar.

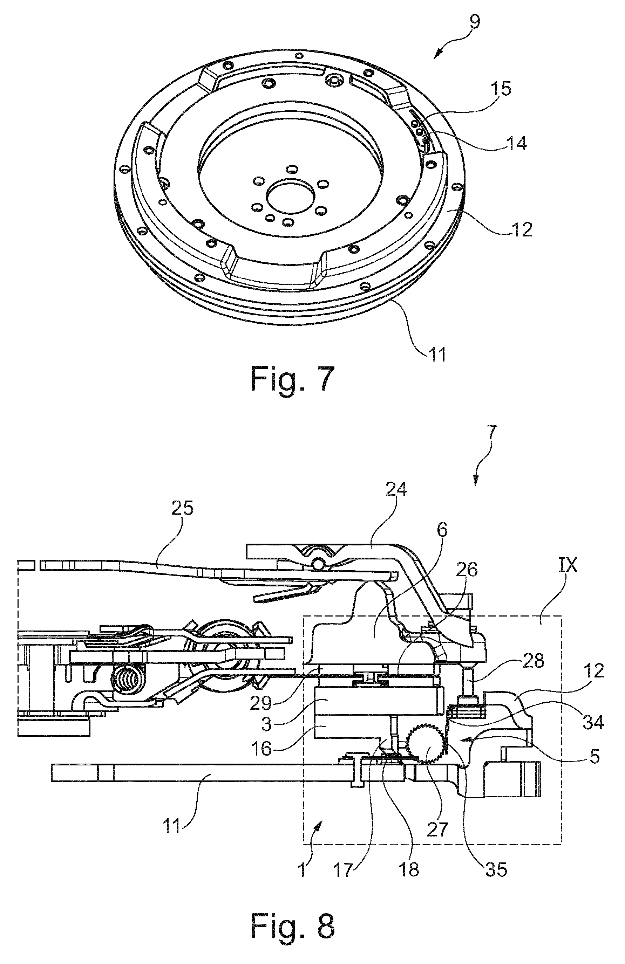

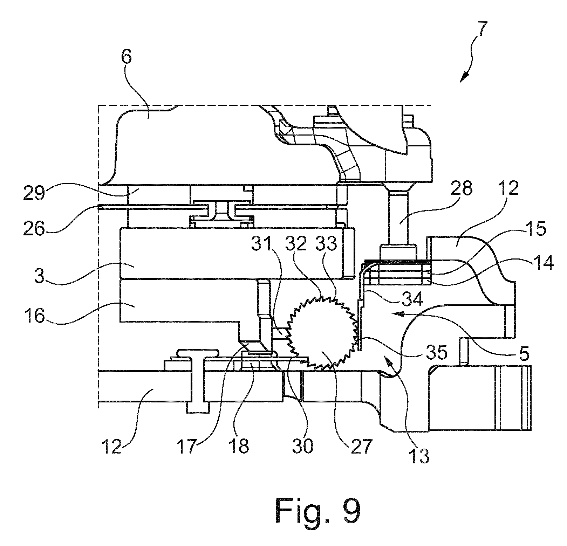

Die Fig. 7 zeigt die Sekundärschwungscheibe 9 mit dem Primärblech 11 und einem an dem Primärblech 11 befestigten Sekundärblech 12. Das Primärblech 11 und das Sekundärblech 12 können miteinander verschweißt sein. Das Sekundärblech 12 weist ein zweites Blattfederpaket 15 mit einer Mehrzahl von zweiten Blattfedern 14 auf. An dem zweiten Blattfederpaket 15 ist eine in der Fig. 9 gezeigte Antriebseinheit 13 einer Nachstelleinrichtung 5 befestigt.

Die Fig. 8 zeigt eine schematische Schnittansicht einer Reibungskupplung 7 mit dem Drehschwingungsdämpfer 1. Die Reibungskupplung 7 weist einen Kupplungsdeckel 24 und eine mit Hilfe einer Tellerfeder 25 axial bewegbare Anpressplatte 6 auf, die mit Hilfe der Tellerfeder 25 in Richtung der Gegendruckplatte 3 bewegt werden kann, um eine mit Reibbelägen 29 versehene Kupplungsscheibe 26 zwischen der Anpressplatte 6 und der Gegendruckplatte 3 zum Schließen der Reibungskupplung 7 zu verpressen. An dem Primärblech 11 des Drehschwingungsdämpfers 1 ist das Sekundärblech 12 befestigt. In dem Sekundärblech 12 sind der Zwischenring 16 mit den Rampen 17 und die Gegendruckplatte 3 unmittelbar aufeinander angeordnet. Zum Nachstellen eines verschleißbedingten Fehlabstands der Anpressplatte 6 zu der Gegendruckplatte 3 ist der Drehschwingungsdämpfer 1 mit der Nachstelleinrichtung 5 versehen. Die Nachstelleinrichtung 5 weist die in Umfangsrichtung verdrehbare Zwischenplatte 16 auf, die mit den axial abstehenden Rampen 17 versehen ist. In diesem Ausführungsbeispiel ist die Zwischenplatte 16 zwischen dem Primärblech 11 und der Gegendruckplatte 3 angeordnet. Das Primärblech 11 weist mehrere axial abstehende Gegenrampen 18 auf. Zum Verdrehen der Zwischenplatte 16 relativ zu dem Primärblech 11 ist die Nachstelleinrichtung 5 mit einer an die Zwischenplatte 16 angreifende Verstelleinheit versehen. In diesem Ausführungsbeispiel ist diese Verstelleinheit als Spindelsystem ausgestaltet. Das Spindelsystem weist eine auf eine hier nicht gezeigte Spindel aufgeschraubte Spindelmutter 31 zum Verdrehen der Zwischenplatte 16 und ein drehfest mit der Spindel verbundenes Ritzel 27 auf. Das Ritzel 27 kann von einer in den Umfang des Ritzels 27 eingreifenden Antriebsklinke 35 verdreht werden. Die Antriebsklinke 35 ist an einer Antriebsfeder 34 angeordnet. Die Antriebsfeder 34 kann von der Anpressplatte 6 über eine Verbindungssäule 28 betätigt werden.

Die Fig. 9 zeigt eine vergrößerte Ansicht des in der Fig. 8 mit IX markierten Bereichs. Wie in der Fig. 8 gezeigt, ist die Antriebsfeder 34 durch die Verbindungssäule 28 mit der Anpressplatte 6 verbunden. Während einer Bewegung der Anpressplatte 6 zu der Gegendruckplatte 3 wird die Antriebsfeder 34 von der Anpressplatte 6 so gedrückt, dass die Antriebsklinke 35 auf den Zähnen 32 des Ritzels 27 gleitet und bei einem vorgegebenen Verschleiß in eine Zahnlücke 33 zwischen zwei Zähnen 32 einrastet. Hierzu ist die Antriebsfeder 34 an dem zweiten Blattfederpaket 15 mit der Mehrzahl von zweiten Blattfedern 14 befestigt. Die Antriebsklinke 35 nimmt beim nächsten Öffnungsvorgang der Reibungskupplung 7 das Ritzel 27 formschlüssig mit und verdreht dabei das Ritzel 27 und damit die hier nicht gezeigte Spindel, wodurch die Spindelmutter 31 entlang der Spindel bewegt wird und die Zwischenplatte 16 um einen entsprechenden Winkelbetrag verdreht, um die Reibungskupplung 7 dadurch nachzustellen. Wie anhand der Fig. 9 ferner zu erkennen ist, ist eine in den Umfang des Ritzels 27 eingreifende und auf das Primärblech 11 befestigte Sperrklinke 30 vorgesehen, die eine unbeabsichtigte Rückdrehung des Ritzels 27 verhindert.

Der vorgeschlagene Drehschwingungsdämpfer 1 zeichnet sich insbesondere durch eine reduzierte Bauteilanzahl aus.

### Bezugszeichenliste

- 1: Drehschwingungsdämpfer
- 2: Schwungscheibe
- 3: Gegendruckplatte
- 4: erste Blattfeder
- 5: Nachstelleinrichtung
- 6: Anpressplatte
- 7: Reibungskupplung
- 8: Primärschwungscheibe
- 9: Sekundärschwungscheibe
- 10: erstes Blattfederpaket
- 11: Primärblech
- 12: Sekundärblech
- 13: Antriebseinheit
- 14: zweite Blattfeder
- 15: zweites Blattfederpaket
- 16: Zwischenplatte
- 17: Rampe
- 18: Gegenrampe
- 19: Langlöcher
- 20: Feder
- 21: Anlasserzahnkranz
- 22: axiale Richtung
- 23: Stift
- 24: Kupplungsdeckel
- 25: Tellerfeder
- 26: Kupplungsscheibe
- 27: Ritzel
- 28: Verbindungssäule
- 29: Reibbelag
- 30: Sperrklinke
- 31: Spindelmutter
- 32: Zähne
- 33: Zahnlücke
- 34: Antriebsfeder
- 35: Antriebsklinke
- 36: Niet

## Patentansprüche

1. Drehschwingungsdämpfer (1) für einen Verbrennungsmotor, aufweisend eine Schwungscheibe (2) und eine Gegendruckplatte (3), wobei die Gegendruckplatte (3) über zumindest eine erste Blattfeder (4) an der Schwungscheibe (2) drehfest befestigt ist und mittels einer Nachstelleinrichtung (5) zum Nachstellen eines verschleißbedingten Fehlabstands der Gegendruckplatte (3) zu einer Anpressplatte (6) einer Reibungskupplung (7) begrenzt axial verlagerbar ist und wobei die zumindest eine erste Blattfeder (4) aus der Schwungscheibe (2) ausgeformt ist.

2. Drehschwingungsdämpfer (1) nach Anspruch 1, wobei die Schwungscheibe (2) eine Primärschwungscheibe (8) und eine Sekundärschwungscheibe (9) aufweist und wobei die zumindest eine erste Blattfeder (4) aus der Sekundärschwungscheibe (9) ausgeformt ist.

3. Drehschwingungsdämpfer (1) nach einem der vorhergehenden Ansprüche, wobei eine Mehrzahl der ersten Blattfedern (4) axial aufeinander als zumindest ein erstes Blattfederpaket (10) angeordnet ist.

4. Drehschwingungsdämpfer (1) nach einem der vorhergehenden Ansprüche, wobei die Schwungscheibe (2) ein Primärblech (11) und ein Sekundärblech (12) aufweist und wobei die zumindest eine erste Blattfeder (4) aus dem Primärblech (11) ausgeformt ist.

5. Drehschwingungsdämpfer (1) nach einem der vorhergehenden Ansprüche, wobei die Nachstelleinrichtung (5) eine Antriebseinheit (13) mit zumindest einer zweiten Blattfeder (14) aufweist und wobei die zumindest eine zweite Blattfeder (14) aus der Schwungscheibe (2) ausgeformt ist.

6. Drehschwingungsdämpfer (1) nach Anspruch 5, wobei die Schwungscheibe (2) ein Primärblech (11) und ein Sekundärblech (12) aufweist und wobei die zumindest eine zweite Blattfeder (14) aus dem Sekundärblech (12) ausgeformt ist.

7. Drehschwingungsdämpfer (1) nach einem der vorhergehenden Ansprüche, wobei eine Mehrzahl der zweiten Blattfedern (14) axial aufeinander als zumindest ein zweites Blattfederpaket (15) angeordnet ist.

8. Drehschwingungsdämpfer (1) nach einem der vorhergehenden Ansprüche, wobei zwischen der Schwungscheibe (2) und der Gegendruckplatte (3) eine Zwischenplatte (16) mit zumindest einer Rampe (17) angeordnet ist und wobei an der Schwungscheibe (2) zumindest eine Gegenrampe (18) als Gegenlager für die zumindest eine Rampe (17) ausgebildet ist.

9. Drehschwingungsdämpfer (1) nach einem der vorhergehenden Ansprüche, wobei die Zwischenplatte (16) eine Mehrzahl von Langlöchern (19) aufweist, mittels denen die Zwischenplatte (16) an die Gegendruckplatte (3) anbindbar ist.

10. Drehschwingungsdämpfer (1) nach einem der vorhergehenden Ansprüche, wobei die Gegendruckplatte (2) an der zumindest einen ersten Blattfeder (4) befestigt ist.
